# EUROPEAN PATENT APPLICATION

(11) **EP 4 589 928 A1**
(43) Date of publication of application: **23.07.2025**
(21) Application number: 24305109.1
(22) Date of filing: 17.01.2024
(51) Int. Cl.: H04L 67/306, H04L 67/303, H04W 8/18, H04W 12/40

(54) **SECURE ELEMENT COMPRISING A VIRTUAL TERMINAL SECURITY DOMAIN AND CORRESPONDING TERMINAL**

(71) Applicant: THALES DIS FRANCE SAS, 92190 Meudon (FR)
(72) Inventor: DEMARTY, Joel, 35520 MONTREUIL LE GAST (FR); GROS, Jean Francois, 13012 MARSEILLE (FR); ESPOSITO, Delfo, 00153 ROMA (IT); BETOLAUD, Arsene, 83640 ST ZACHARIE (FR)
(74) Representative: Scheer, Luc

(57) **Abstract**

The invention proposes a secure element 40 cooperating with a device 30, the secure element 40 comprising a GSMA elllCC function comprising an ECASD eUICC Controlling Authority Security Domain - 46 , an ISD-R Issuer Security Domain - Root - 43 and at least an ISD-P Issuer Security Domain - Profile - 44, the secure element 40 also comprising a Virtual Terminal Security Domain 42 having a direct access to the GSMA eUICC function via a virtual APDU interface, the Virtual Terminal Security Domain 42 interacting with the GSMA eUICC function with the same APDUs as the device 30.

## Description

The domain of the invention is telecommunications. More precisely the invention concerns a device, like an loT device for example, comprising a profile assistant integrated in an eSIM, also called eUICC (embedded UICC).

The invention proposes an improvement to the GSMA specifications Remote SIM Provisioning (SGP.22 that provides a technical description of the GSMA's 'Remote SIM Provisioning (RSP) Architecture for consumer Devices', SGP.21 v3.0 that applies for eSIM Products) and loT Remote SIM provisioning (SGP.32 that provides a technical description of the GSMA's eSIM loT Architecture and Requirements SGP.31 specification).

These specifications describe architectures of systems comprising eUICCs cooperating with LPAs or IPAs (respectively Local Profile Assistant and loT Profile Assistant): A LPA is a Local Profile Assistant, a functional element in the device or in the eUICC, that provides the Local Profile Download (LPD), Local Discovery Services (LDS) and Local User Interface (LUI) features.

When a LPA is located in a Device, these are respectively called LPAd, LPDd and LUld.

When the LPA is located in a eUICC, these are respectively called LPAe, LPDe and LUle. When LPA, LPD or LUI are used, they apply to the element independent of its location, in the device or in the eUICC.

A LPA is a set of functions in a device responsible for providing the capability to download encrypted profiles to the eUICC. It also presents the local management user interface to the end user so they can manage the status of profiles on the eUICC. The principal functions of the LPA may also be in built into the eUICC.

The eUICC structure consists of a hierarchy of different security domains being assigned with specific access rights and privileges.

The root of all eUICC accesses is the ISD-R (issuer security domain - root). The ISD-R is responsible for the creation of new ISD-Ps (issuer security domain - profile) and life-cycle management of all ISD-Ps. The ISD-R is used for the profile download and installation. There is only one ISD-R on an eUICC and the ISD-R is installed and personalized by the EUM (eUICC manufacturer) during eUICC manufacturing.

The ISD-P is a secure container (Security Domain) for the hosting of a unique profile. The ISD-P is also used for updating the profile metadata on behalf of the MNO (Mobile Network Operator). The ISD-P shall ensure that:
a) It hosts a unique profile;
b) Only the following application layer components shall have access to the profiles:
   - ISD-P;
   - ISD-R, which shall only have access to the metadata of the profiles;
c) A profile component shall not have any visibility of, or access to, components outside its ISD-P. An ISD-P shall not have any visibility of, or access to, any other ISD-P;
d) Deletion of a profile shall remove the containing ISD-P and all profile components of the profile.

This is the only way to create new ISD-P instances as a container for a given mobile operator's profile. A profile corresponds to a set of data and programs corresponding to a subscription. Access to the profile data within such a container is restricted to the profile owner that means the MNO.

As already said, an IPA is located either in the loT Device (IPAd) or in the eUICC (IPAe).

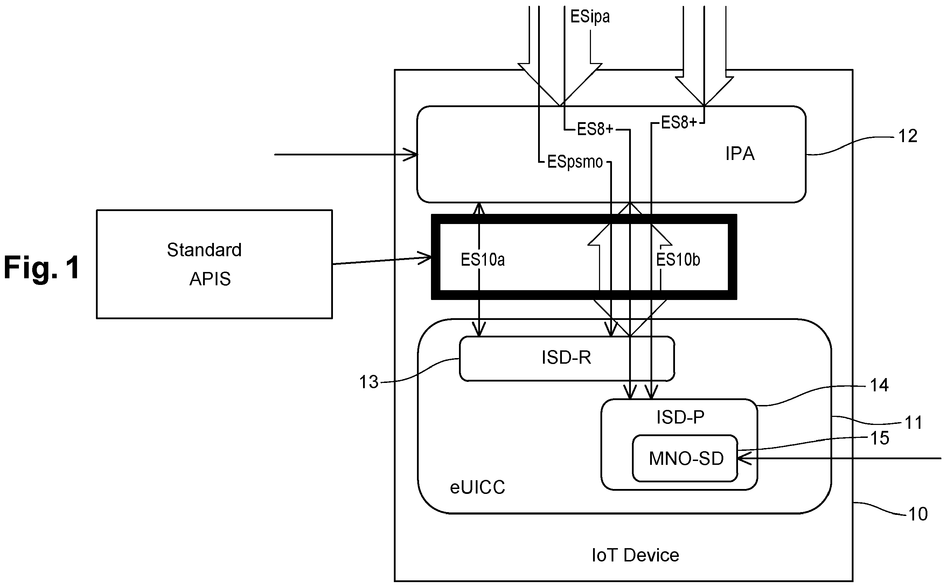

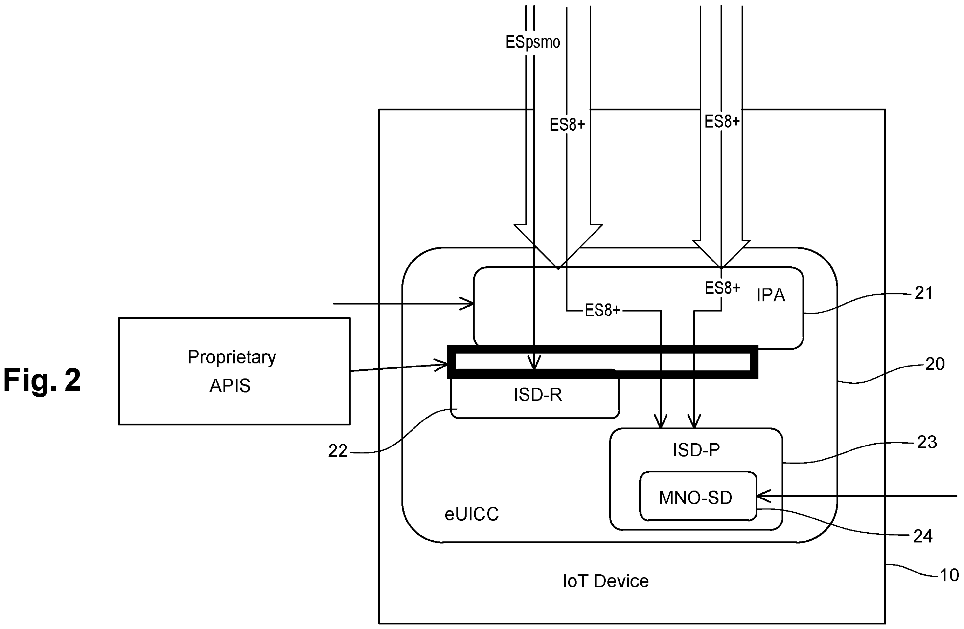

Figures 1 and 2 represent two architectures of loT devices comprising local assistants, in which the IPA is in an loT device (figure 1) or in the eUICC (figure 2) of this loT device, according to SGP.31 "eSIM loT Architecture and Requirements", Version 1.0, 19 April 2022 (Section 4). This requirement is similar to the one disclosed in SGP.32 "eSIM loT Technical Specification", Version 1.0.1, 04 July 2023.

The LPA (Local Profile Assistant) in SGP.22 or IPA (IoT Profile Assistant) in SGP.32 is a device agent embedded in the device (then called LPAd/IPAd) or in the eUICC (then called LPAe/IPAe). The profile assistant interfaces with the ISD-R and ISD-P in order to perform profile operations (download, enable/disable, etc.).

In figure 1, an loT device 10 comprises an eUICC 11 and an IPA 12 external of the eUICC 11 (i.e. an IPAd). The eUICC 11 comprises an ISD-R 13 and an ISD-P 14 storing a MNO-SD 14. The eUICC 11 is linked to the IPA 12 by two standardized interfaces:
- a ES10a interface that handles a Profile discovery as defined in SGP.31;
- a ES10b interface that handles the transfer of a Bound Profile Package to the eUICC 11 as defined in SGP.31. The ES10b interface comprises two ES8+ interfaces and a ESpsmo interface. The ESpsmo is a logical end-to-end interface between an elM (eUICC loT Manager) and the eUICC 11. The ES8+ interface is between a SM-DP+ and the eUICC's ISD-P. This interface has the purpose to deliver new profiles to the eUICC. The main functions provided by this interface concern the key propagation between a SM-DP+ and an ISD-P as well as the download of the profile data.

The IPA also communicates with the ISD-P 14 through two other ES8+ standardized interfaces that provide a secure end-to-end channel between a SM-DP+ (not represented) and the eUICC 11 for the administration of the ISD-P 14 and the associated profile during download and installation.

These interfaces communicate standard APIs. In other words, when the API 12 is in the device 10, it interacts with the ISD-R/ ISD-P on the eUICC using standard APIs.

In figure 2, the loT device 10 comprises an eUICC 20 in which an IPA 21, an ISD-R 22 and an ISD-P 23 (comprising a MNO-SD 24) are embedded. In this case, the IPA21 communicates with the ISD-R through a ESpsmo interface and with the ISD-P through two ES8+ interfaces. The IPA21 is here in fact an IPAe (a functional element which provides similar features as those provided by an IPA in an loT Device) since it is integrated in the eUICC 20.

In figures 1 and 2, the eUICCs also comprise an ECASD not represented. An ECASD provides secure storage of credentials and security functions for key establishment and eUICC authentication.

These interfaces are here, contrarily to the previous architecture, transporting proprietary APIs (there is no standard for these interfaces). These APIs are defined by the vendor/manufacturer of the eUICC 20.

The problems of these two architectures are the followings:
When the IPA is in the device 10 (LPAd/IPAd), it interacts with the ISD-R/ ISD-P on the eUICC using standardized APIs. An LPAd/IPAd assistant is compatible with any SGP.22/SGP.32 compliant eUICC from any vendor.

This solution is convenient for the MNO and the OEM. However, integrating an LPAd/IPAd on the device is cumbersome and cannot be done on deployed devices without a new certification. This solution is therefore not convenient for the OEM, the SP (service provider) and the MNO. Moreover, the LPAd/IPAd is running on untrusted execution environment (not convenient for the SP and the MNO).

The LPAd/IPAd being outside of the eUICC OS and the eSA certification (GSMA eUICC Security Assurance) security target - any change to the IPA does not require a recertification of the eUICC (this solution is therefore good for the EUM).

Finally, regarding the OEM, the LPAd/IPAd can be changed without locking from eUICC vendor. This solution is therefore suitable for the OEM.

On the other side, when the assistant is in the eUICC (LPAe/IPAe), it interacts with ISD-R/ISD-P on the eUICC using vendor defined APIs. A LPAe/IPAe assistant is only compatible with specific SGP.22/SGP.32 eUICCs from specific vendors. This solution is therefore not convenient for the MNO and the OEM.

Integrating an LPAe/IPAe on the device is transparent and can be deployed without recertification of the device. This solution is therefore convenient for the OEM, the SP and the MNO. Also, the LPAe/IPAe is running on a trusted execution environment (this point is convenient for the SP and the MNO).

However, the LPAe/IPAe is proprietary to the eUICC vendor and it locks the solution to this vendor (this is not satisfying for the OEM). Moreover, the LPAe/IPAe is considered as part of the eUICC OS (Operating System) and the eSA certification security target - any change to the agent requires a recertification (bad for the EUM) - this blocks business agility.

In conclusion, none of these two solutions (IPA in the device or in the eUICC) is satisfying for the different actors (MNO, OEM, EUM, SP).

The present invention proposes to solve this problem.

More precisely, the invention proposes a secure element and a device according to the appended claims.

The invention will be better understood by reading the following description of a preferred architecture of a eUICC according to the invention.

Figures 1 and 2 have been described in the regard of the state of the art.

Figure 3 represents a preferred architecture of a eUICC according to the invention.

This architecture corresponds to a GSMA SGP.32 use case (loT profile assistant integrated in the eUICC, the whole architecture of the system being described in SGP.32 - eSIM loT Technical Specification v1.0.1, 04 July 2023).

The difference between the present invention and this technical specification is that the loT device contains an eUICC 40 according to the invention.

In this figure, the elements communicating with the loT device 30 represented and their functions are not described hereinafter as they are known from SGP.32. These elements are a SM-DS 31, a SM-DP+ 32, an operator network (MNO) 33 and an eSIM loT remote Manager (elM) 34.

The represented different interfaces are also identical to those of SGP.32 according to the following table that provides information about the interfaces within the architecture.

| Interface | Between | | Description |
|---|---|---|---|
| ES8+ | SM-DP+ | eUICC | Provides a secure end-to-end channel between the SM-DP+ and the eUICC for the administration of the ISD-P and the associated Profile during download and installation. |
| ES9+ | SM-DP+ | IPA | Used to provide a secure transport between the SM-DP+ and the IPA for the delivery of the Bound Profile Package as defined in SGP.31. |
| ES9+' | SM-DP+ | eIM | Used to provide a secure transport between the SM-DP+ and the elM for the delivery of the Bound Profile Package as defined in SGP.31. |
| ES10a | IPA | eUICC | Used between the IPA (in the IoT Device) and the eUICC to handle a Profile discovery as defined in SGP.31. |
| ES10b | IPA | eUICC | Used between the IPA (in the IoT Device) and the IPA Services to transfer a Bound Profile Package to the eUICC as defined in SGP.31. |
| ES11 | IPA | SM-DS | Used by the IPA to retrieve Event Records for the respective eUICC as defined in SGP.31. |
| ES11' | elM | SM-DS | Used by the elM to retrieve Event Records for the respective eUICC as defined in SGP.31. |
| ES12 | SM-DP+ | SM-DS | Used by the SM-DP+ to issue or remove Event Registrations on the SM-DS as defined in SGP.31. |
| ESep | eIM | eUICC | Logical end-to-end interface between the elM and the eUICC used to transfer eUICC Packages for Profile State management and elM configuration by elM, as defined in SGP.31. |
| ESipa | eIM | IPA | Logical interface between an elM and an IPA, as defined in SGP.31, used to trigger a Profile download at the IPA and to provide a secure transport for the delivery of eUICC Packages, unless the underlying transport provides necessary security. |

The eUICC 40 comprises a GSMA eUICC function comprising as known in the prior art an ECASD 46 (eUICC Controlling Authority Security Domain), an ISD-R 43 (Issuer Security Domain - Root) and at least an ISD-P 44 (Issuer Security Domain - Profile).

In the scope of the invention, the eUICC 40 embedded in the loT device 30 comprises an embedded IPA41 (an IPAe in fact since embedded in the eUICC 40). The IPA41 is comprised in a so-called Virtual Terminal SD (VTSD) 42. The VTSD 42 is the hearth of the present invention. It communicates with the elM 34, the SM-DP+ 32, the SM-DS 31 via standardized interfaces and with other elements comprised in the eUICC 40 (described below).

The VTSD 42 has a direct access to the GSMA eUICC functions (ECASD 46, ISD-R 43 and ISD-P 44) via a virtual APDU interface (ES10a, ES10b), the VTSD 42 interacting with these GSMA eUICC functions with the same APDUs as the device 30.

This means that all the GSMA eUICC functions are communicating with the loT device 30 as they would communicate with standardized APIs like shown in figure 1 through the VTSD 42. Integrating a VTSD 42 in the eUICC 40 thus allows using standardized communications between the external environment of the device 30 (SM-DS 31, SM-DP 32, operator 33 and elM 34) by having an IPA integrated in the eUICC 40, instead of having this IPA external to the eUICC (as shown in figure 1).

To be complete for the off-eUICC infrastructure, each of the on-eUICC security domains corresponds to one of the off-eUICC roles on the server side. Access to the ISD-R 43 is controlled by the elM 34. This is the only instance with access to the necessary keys that can create new containers, delete containers no longer needed and activate or deactivate any given profile. After the elM 34 has created a new profile container (ISD-P 44), it is handed over to the profile owner who subsequently loads the profile data into that container. This is done by the SM-DP+ 32. As soon as a profile is loaded and activated, the MNO 33 has access to the internals of the profile as it would be the case with a traditional UICC, too. Each of these roles can be assigned to different security realms with their own certificates and keys in place. This guarantees that each of the roles is only able to access the data necessary for its specific tasks. The VTSD 42 is a security domain located outside the domain of the eUICC domains (ECASD, ISD-R, ISD-P) that gives the same level of access as a real terminal (via the ISO interface for example) but with more security (because contained in a secure element) and in a trusted domain (SD) which is not necessarily that of the device.

This VTSD 42 can be a or belonging to a transversal security domain. It can also be a standalone security domain aside the eUICC domain or belonging to a Secure Application for Mobile Security Domain (SAM) 47.

The general structure of a SAM 47 can be found in the GSMA specification "Secured Applications for Mobile - Requirements" Version 1.0 of June 8 2021.

In the case of RSP, the invention allows a third party to control the eUICC profiles (stored in a plurality of ISD-Ps), without modification of the device 30, for example for managing a fleet of devices (terminals).

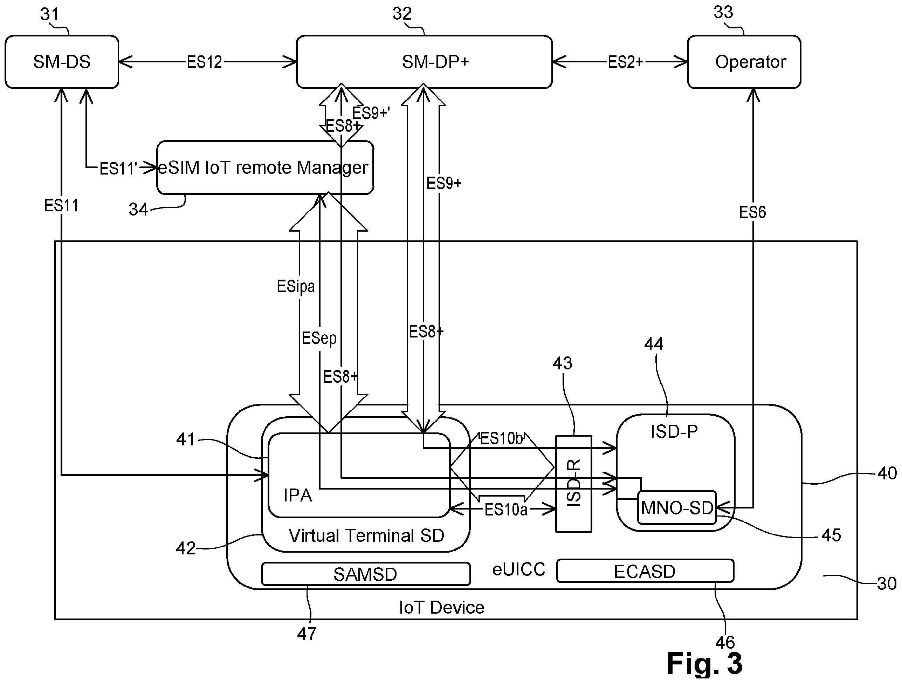

To further describe figure 3, the IPA 41 of the VTSD 42 communicates with the ISD-R 43 through ES10a and ES10b standard interfaces that form a virtual APDU channel. The IPA41 also serves as a proxy for the communications between the elM 34, the SM-DP+ 32 and the ISD-P 44 that transit through the ISD-R 43. A direct communication between, on one side the SM-DP+ 32 and the elM 34, and, on the other side, the ISD-P 44 is thus established. The ISD-P 44 comprises a MNO-SD 45 directly connected through a ES6 to the MNO (operator 33). The MNO 33 can thus install and manage the MNO-SD 45.

More precisely, the MNO 33 can access the activated card profile stored in the MNO-SD 45 by SCP80 or SCP81. If necessary, data designated for a third-party SSD can be secured by SCP03 and embedded into the transport packets. From a functional point of view, this interface allows for providing the operator's policies concerning the deactivation or deletion of the profile as well as setting specific connection parameters.

The eUICC 40 of the invention also comprises an ECASD (eUICC Controlling Authority Security Domain) 46 also connected through functions ES10a and ES10b (not represented) to the VTSD 42.

In the case where the eUICC 40 comprises more than one ISD-P 44, each ISD-P communicates with a dedicated VTSD 42. A plurality of VTSD 42 can thus be comprised in the eUICC 40. The use of multiple enabled profiles (MEPs) within one eUICC are features introduced in versions 3 of the consumer specifications SGP.22 and SGP.32.

To be more precise, for each active profile of the eUICC 40:
- one VTSD 42 is used for a standard eUICC not supporting MEP;
- one VTSD 42 is used per channel for a standard eUICC supporting MEP.

The eUICC 40 also comprises preferably a SAM-SD (Secure Application for Mobile Security Domain) 47 like described for example in:
- https://www.gsma.com/newsroom/wp-content/uploads//SAM.01-v1.0.pdf,
- https://www.bsi.bund.de/SharedDocs/Downloads/EN/BSI/Publications/Secure-Elements/SAM/SAM Position Paper v1-0.html#:~:text=Secured%20Application%20on%20Mobile%20(SAM,telecommunication%20for% 20protection%20requiring%20applications or
- https://www.eurosmart.com/european-mobile-identity-recommendations-on-sam-technology/

As described in the last cited document from Eurosmart^{™}, SAM technology enhances the eUICC with a logical area (SAM area, also called SAM Security Domain) independent from any mobile operator/service provider eUICC profile. Therefore, if the user decides to change its mobile operator, he could switch to a new mobile operator profile, and the content of the eUICC will be updated, except this SAM area.

The user can also have multiple operator subscriptions (MEPs), and the SAM area will remain whatever the number of operator profiles stored and activated. The SAM applications and the sensitive user information they contain can hence be securely stored in the eUICC in an isolated way. The SAM applications and user credentials contained in the SAM area of the eUICC would not be changed. This immutable area could be used for the storage and secure execution of SAM applications (and the storage of corresponding credentials) bound to the user. It would not depend on the user being the customer of a given mobile operator (unlike applications in an eUICC profile). Therefore, the user can keep its SAM applications and corresponding credentials on the same device, even if he changes his mobile subscription.

A typical example would be a payment application that could work for any MNO (i.e. for any subscription).

The VTSD 42 can be used for things other than IPA and LPA or in addition to I PA/LPA, for example providing flexible application logic (aka business rules) in profile control without affecting eUICC and terminal certifications.

The invention thus proposes a way to benefit from the best of both options presented previously in regard of figures 1 and 2:
- The creation of the VTSD 42 in the eUICC 40 with access to ECASD 46, ISD-P 44 and ISD-R 43 via a virtual standardized APDU interface. The VTSD 42 hosts the LPA/IPA with same functionalities and interfaces as the LPAd/IPAd;
- The virtual terminal belongs to a transversal security domain or Secured Application for Mobile Security Domain (GSMA SAM.01 concept);
- The VTSD can be a kind of SAM SD with direct access to ECASD, ISD-R and ISD-P via virtual APDU interfaces - carrier class rights for ASP SD (Application Service Provider Security Domain).

The different SD can be nested (slotted, encased). For example, ISD-P and ISD-R can be nested in the eUICC GSMA security domain but there may be another security domain next to it in the eUICC - for example SAM SD or a proprietary transversal SD. That's why the VTSD can belong to another SD.

The VTSD 42 is thus a security domain located outside the domain of the eUICC domains (ECASD, ISD-R, ISD-P) which gives the same level of access as that of the real terminal real 30 (via the ISO interface for example) but with more security (because contained in a secure element) and in a trusted domain (eUICC) which is not necessarily the case for a device.

The device 30 can be either:
- a consumer device, or
- an loT device, or
- a telematics device, or
- any other cellularly connected device.

The invention also concerns a device comprising a secure element as described in regard of figure 3.

Some of the advantages of the invention are:
- The VTSD 42 can be under control of the device maker or the service provider;
- It is customer specific;
- It allows to run protected applications affecting the connectivity without touching the device firmware;
- The fact that there can be one VTSD per MEP channel: enforces separation of control of the eUICC for personal eSIM and professional eSIM for instance without changing the eSIM specification;
- By adding a VTSD to SAM SD infrastructure, it enables direct management of SAM applets without an LAA in the device.

## Claims

1. A secure element (40) cooperating with a device (30), said secure element (40) comprising a GSMA eUICC function comprising an ECASD (eUICC Controlling Authority Security Domain - 46) , an ISD-R (Issuer Security Domain - Root - 43) and at least an ISD-P (Issuer Security Domain - Profile - 44), said secure element (40) also comprising a Virtual Terminal Security Domain (42) having a direct access to said GSMA eUICC function via a virtual APDU interface, said Virtual Terminal Security Domain (42) interacting with said GSMA eUICC function with the same APDUs as said device (30).

2. A secure element (40) according to claim 1 wherein said device is:
- a consumer device, or
- an loT device, or
- a telematics device, or
- any other cellularly connected device.

3. A secure element (40) according to claim 1 or 2 wherein it comprises a Virtual Terminal Security Domain (42) for each active profile of said eUICC:
- one Virtual Terminal Security Domain (42) for a standard eUICC not supporting MEP (Multi Enabled Profiles);
- one Virtual Terminal Security Domain (42) per channel for a standard eUICC supporting MEP (Multi Enabled Profiles).

4. A secure element according to any of the claims 1 to 3, wherein said Virtual Terminal Security Domain (42):
- is a standalone security domain aside the eUICC domain, or
- belongs to a transversal security domain, or
- belongs to a Secure Application for Mobile Security Domain (SAM).

5. A device (30) comprising a secure element (46) according to any of the claims 1 to 4.
